# EUROPÄISCHE PATENTSCHRIFT

(11) **EP 0 482 370 B1**
(45) Veröffentlichungstag und Bekanntmachung des Hinweises auf die Patenterteilung: **24.07.1996**
(21) Anmeldenummer: 91116278.2
(22) Anmeldetag: 25.09.1991
(51) Int. Cl.: C08K 5/3492, C08K 5/00

(54) **Flammfeste Kunststoffe mit einem Gehalt an Harnstoffcyanurat**
Flame resistant resins containing urea cyanurate
Résines ignifuges contenant du cyanurate d'urée

(30) Priorität: 15.10.1990 AT 2069/90
(43) Veröffentlichungstag der Anmeldung: 29.04.1992
(73) Patentinhaber: Chemie Linz GmbH, A-4021 Linz (AT)
(72) Erfinder: Horacek, Heinrich, Dr., A-4020 Linz (AT)
(74) Vertreter: Kunz, Ekkehard, Dr.

(56) Entgegenhaltungen:
- DE-A- 2 740 092
- US-A- 4 001 177
- WORLD PATENTS INDEX LATEST Week 9040, Derwent Publications Ltd., London, GB; AN 90-302928 & JP-A-2 215 857 (NIPPON KASEI KK) 28. August 1990
- PATENT ABSTRACTS OF JAPAN vol. 3, no. 59 (C-46)19. Mai 1979 ( UNITIKA K.K. ) 3. Dezember 1979 & JP-A-54 033 560
- WORLD PATENTS INDEX LATEST Week 8150, Derwent Publications Ltd., London, GB; AN 81-92118D & JP-A-56 140 979 (MITSUI TOATSU) 4. November 1981

## Beschreibung

Die Erfindung betrifft Kunststoffe, die zur Verbesserung ihrer Flammfestigkeit Harnstoffcyanurat enthalten.

Die üblicherweise verwendeten halogenhältigen Flammhemmer zeigen zwar eine gute Wirkung, sie weisen aber den entscheidenden Nachteil auf, daß sie im Brandfall, vor allem im Falle eines längeren Brandes, toxische und korrosive Chlor- und Bromverbindungen freisetzen. Zur Ausschaltung dieser Nachteile wurden bereits halogenfreie Flammschutzmittel eingesetzt, beispielsweise Melamin oder Melamincyanurat (DE-OS 27 40 092).

Melamin weist unter anderem den Nachteil auf, daß es bei der Verarbeitung der Kunststoffe zum Ausblühen neigt, wodurch es teilweise an die Oberfläche wandert und beispielsweise in den Spritzgußformen einen störenden Belag bildet. Melamincyanurat neigt bei der Einarbeitung in den Kunststoff zur Sublimation, wobei der Kunststoff etwas aufschäumt und die Schüttdichte herabgesetzt wird. Da Melamin zudem ein hochwertiges Ausgangsmaterial beispielsweise zur Herstellung hochwertiger Kunststoffe darstellt, war es wünschenswert, Flammschutzmittel auf Basis von anderen Substanzen bereitzustellen, die gleichzeitig eine ausreichend gute flammhemmende Wirkung für Kunststoffe aufweisen. Es wurde überraschenderweise gefunden, daß Harnstoffcyanurat diese Anforderungen erfüllt und trotz des geringeren Stickstoffgehaltes im Molekül eine gute flammhemmende Wirkung für Kunststoffe zeigt.

Gegenstand der Erfindung sind demnach flammfeste Kunststoffe, die Harnstoffcyanurat enthalten.

Harnstoffcyanurat ist sowohl für thermoplastische als auch für duromere oder elastomere Kunststoffe als Flammhemmer geeignet. Als Kunststoffe kommen beispielsweise solche aus der Gruppe der Polyolefine, wie z. B. Polyethylen, Polypropylen, bzw.

Ethylen-Propylen-Copolymere, Polybutylen oder Polymethylpenten, Polyvinylacetat, Polyamide, Polyacrylnitril oder Polyacrylnitril enthaltende Kunststoffe, wie z. B. ABS (Acrylnitril-Butadien-Styrol Copolymer) oder SAN (Styrol-Acrylnitril-Copolymer), thermoplastische oder vernetzte Polyurethane, thermoplastische, ungesättigte oder vernetzte Polyester, Epoxide, Acrylharze, Harnstoff-, Melamin- oder Phenolformaldehydharze in Frage. Die Kunststoffe können auch geschäumt sein. Weiters ist es möglich, Mischungen verschiedener Kunststoffe oder Copolymere aus verschiedenen Monomeren, beispielsweise Ethylen-Propylen-Copolymere, mit Harnstoffcyanurat flammhemmend auszurüsten. Besonders geeignet als Flammhemmer erweist sich Harnstoffcyanurat für stickstoffhältige Kunststoffe, wie z. B. Polyamide, Polyurethane, Polyacrylnitril oder Polyacrylnitril enthaltende Kunststoffe. Außer seiner guten flammhemmenden Wirkung besitzt Harnstoffcyanurat den zusätzlichen Vorteil, daß es einen sehr hohen Zersetzungspunkt von etwa 400°C aufweist und daß es schwer wasserlöslich ist.

Harnstoffcyanurat kann für sich allein oder gemeinsam mit anderen Flammhemmern eingesetzt werden. Als weitere Flammhemmer eignen sich vorzugsweise halogenfreie, wie z. B. Melamin, Melamincyanurat, Flammhemmer auf Phosphorbasis, beispielsweise Ammoniumpolyphosphat, Phosphorsäureester und roter Phosphor oder Flammhemmer auf Basis von Borsäureestern.

Die Herstellung der flammfesten Kunststoffe erfolgt beispielsweise durch Mischen von Harnstoffcyanurat mit dem jeweiligen Kunststoff. Im Falle von thermoplastischen Kunststoffen kann die Mischung anschließend beispielsweise in einem Extruder aufgeschmolzen werden. Im Falle von Reaktionsharzen ist es auch möglich, Harnstoffcyanurat den Reaktionskomponenten zur Herstellung des Kunststoffes bereits im Zuge seiner Herstellung zuzusetzen. Beispielsweise ist es im Falle von Polyurethanen möglich, Harnstoffcyanurat und gegebenenfalls weitere Flammhemmer bereits den Polyolen oder den Polyisocyanaten vor der Polymerisationsreaktion zuzusetzen.

Zur flammhemmenden Ausrüstung der Kunststoffe wird bevorzugt ein Harnstoffcyanurat verwendet, bei dem mindestens 95 Gew.% eine Korngröße von maximal 0,025 mm besitzen. Der Gehalt der Kunststoffe an Harnstoffcyanurat beträgt entsprechend den jeweiligen Anforderungen an die Flammbeständigkeit üblicherweise etwa 1 bis 30 Gew.%, bevorzugt etwa 5 bis 20 Gew.%.

In den nachfolgenden Beispielen wurden folgende Kunststoffe flammhemmend ausgerüstet:
- PA 6: Polyamid 6 (Ultramid B4, BASF)
- PA6,6: Polyamid 6,6 (Durethane A31, Bayer)
- TPU: Thermoplastisches Polyurethan (Desmopan Shore A80, Bayer)
- ABS: Acrylnitril-Butadien-Styrol-Copolymer (Terluran 99S, BASF)
- SAN: Styrol-Acrylnitril-Copolymer (Luran 53, BASF)
- PP: Polypropylen (Daplen PP CS10, PCD Polymere)

### Herstellung von Harnstoffcyanurat:

600 g Wasser und 180,2 g (3 Mol) Harnstoff wurden auf 90°C erhitzt und unter Rühren 387,2 g (3 Mol) Cyanursäure zugegeben. Nach weiterem 2-stündigen Rühren bei 90°C wurde das gebildete Harnstoffcyanurat abgesaugt, zweimal mit kaltem Wasser gewaschen und über Nacht bei 105°C im Trockenschrank getrocknet. Der Schmelzpunkt lag bei 245 - 265°C.

### Beispiel 1:

Einem Zweischneckenextruder (LSM 30/34 GL 9R, Fa. Leistritz) wurden getrennt voneinander 5 kg/h PA 6 und 0,32 kg/h Harnstoffcyanurat (HC_{Y}) zudosiert, bei 300°C aufgeschmolzen und homogenisiert, über eine 2 mm Lochdüse extrudiert und mittels Kaltabschlag granuliert. Die Granulate wurden anschließend auf einer Heißpresse bei 280°C zu 3,2 mm dicken Plättchen verpreßt, die gemäß UL 94 auf ihre Flammfestigkeit geprüft wurden. Die Flammfestigkeit lag bei V-O, entsprechend einer maximalen Nachbrenndauer von 10 sec nach 10 sec Beflammung.

### Beispiele 2 - 7:

Analog zu Beispiel 1 wurden Probeplättchen aus mit Harnstoffcyanurat flammfest ausgerüsteten Kunststoffgranulaten hergestellt, wobei jedoch die in Tabelle 1 angeführten Kunststoffe und Mengen (Gew.%) Harnstoffcyanurat eingesetzt wurden. In Beispiel 7 wurde zusätzlich zum Harnstoffcyanurat Ammoniumpolyphosphat (Exolit 422, Hoechst) als weiterer Flammhemmer mitverwendet. Die Flammfestigkeit entsprach in allen Fällen der Brandklasse V - O.

### Vergleichsbeispiel V1:

Analog zu Beispiel 1 wurden Probeplättchen aus PA6 ohne Flammhemmer hergestellt. Die Flammfestigkeit entsprach der Brandklasse V - 2 gemäß UL94, entsprechend einer Nachbrennzeit von 30 Sekunden, wobei zusätzlich brennende Teilchen abfielen.

### Vergleichsbeispiel V2:

Analog zu Beispiel 1 wurden Probeplättchen aus PA6 mit einem Zusatz von 8 Gew.% Melamincyanurat (Chemie Linz) als Flammhemmer hergestellt. Die Flammfestigkeit entsprach der Brandklasse V-O gemäß UL 94. Das Schüttgewicht der Granulate lag mit 630 g/l (Tabelle 1) unter jenem der mit Harnstoffcyanurat ausgerüsteten Kunststoffen.

**Tabelle 1:**

| | Kunststoff | Flammhemmer* | Gew.% | Brandklasse (UL 94) | Schüttgewicht der Granulate (g/l) |
|---|---|---|---|---|---|
| 1 | PA 6 | HC_{Y} | 6 | V - O | 680 |
| 2 | PA 66 | HC_{Y} | 6 | V - O | 700 |
| 3 | TPU | HC_{Y} | 10 | V - O | 720 |
| 4 | ABS | HC_{Y} | 20 | V - O | 750 |
| 5 | SAN | HC_{Y} | 20 | V - O | 750 |
| 6 | PP | HC_{Y} | 25 | V - O | 680 |
| 7 | PP | HC_{Y} | 12,5 | | |
| | | Phosph | 12,5 | V - O | 680 |
| V1 | PA 6 | - | - | V - 2 | 620 |
| V2 | PA 6 | MC_{Y} | 8 | V - 0 | 630 |

| | | | | | |
|---|---|---|---|---|---|
| *HC_{Y} Harnstoffcyanurat MC_{Y} Melamincyanurat Phosph Ammoniumpolyphosphat | | | | | |

## Patentansprüche

1. Flammfester Kunststoff, der als Flammhemmer Harnstoffcyanurat enthält.

2. Flammfester Kunststoff gemäß Anspruch 1, der Stickstoff in der Polymerkette enthält.

3. Flammfester Kunststoff gemäß Anspruch 1, der im wesentlichen aus Polyamiden, Polyurethanen, Polyacrylnitril oder Polyacrylnitril enthaltenden Kunststoffen und Harnstoffcyanurat besteht.

4. Flammfester Kunststoff gemäß Anspruch 1, der 5 bis 20 Gew.% Harnstoffcyanurat enthält.

5. Flammfester Kunststoff gemäß Anspruch 1, in dem mindestens 95 Gew.% des Harnstoffcyanurats eine Korngröße von maximal 0,025 mm besitzen.

6. Flammfester Kunststoff gemäß Anspruch 1, der zusätzlich weitere Flammhemmer enthält.

7. Ein Verfahren zur Erhöhung der Flammfestigkeit von Kunststoffen, bei dem den Kunststoffen oder den Reaktionskomponenten zur Herstellung der Kunststoffe Harnstoffcyanurat als Flammhemmer zugesetzt wird.

8. Verwendung von Harnstoffcyanurat als Flammhemmer für Kunststoffe.

## Claims

1. Flameproof plastic which contains urea cyanurate as flame retardant.

2. Flameproof plastic according to Claim 1, which contains nitrogen in the polymer chain.

3. Flameproof plastic according to Claim 1, which essentially consists of polyamides, polyurethanes, polyacrylonitrile or polyacrylonitrile-containing plastics and urea cyanurate.

4. Flameproof plastic according to Claim 1, which contains 5 to 20% by weight of urea cyanurate.

5. Flameproof plastic according to Claim 1, in which at least 95% by weight of the urea cyanurate has a particle size of at most 0.025 mm.

6. Flameproof plastic according to Claim 1, which additionally contains further flame retardants.

7. A process for improving the flameproof characteristics of plastics, in which the urea cyanurate is added as flame retardant to the plastics or to the reactants for the preparation of the plastics.

8. Use of urea cyanurate as flame retardant for plastics.

## Revendications

1. Matière plastique ignifuge contenant du cyanurate d'urée comme agent ignifuge.

2. Matière plastique ignifuge selon la revendication 1, contenant de l'azote dans la chaîne polymère.

3. Matière plastique ignifuge selon la revendication 1, formée essentiellement de polyamides, de polyuréthanes, de polyacrylonitrile ou de matières plastiques contenant du polyacrylonitrile, et de cyanurate d'urée.

4. Matière plastique ignifuge selon la revendication 1, contenant 5 à 20 % en poids de cyanurate d'urée.

5. Matière plastique ignifuge selon la revendication 1, dans laquelle au moins 95 % en poids des grains du cyanurate d'urée ont une dimension maximale de 0,025 mm.

6. Matière plastique ignifuge selon la revendication 1, contenant, en outre, d'autres agents ignifuges.

7. Procédé pour augmenter la résistance aux flammes des matières plastiques, dans lequel on ajoute du cyanurate d'urée, comme agent ignifuge, aux matières plastiques ou aux composants de réaction servant à la préparation des matières plastiques.

8. Utilisation de cyanurate d'urée comme agent ignifuge pour matières plastiques.
